# EUROPÄISCHE PATENTSCHRIFT

(11) **EP 1 190 518 B1**
(45) Veröffentlichungstag und Bekanntmachung des Hinweises auf die Patenterteilung: **17.11.2004**
(21) Anmeldenummer: 00943612.2
(22) Anmeldetag: 12.05.2000
(51) Int. Cl.: H04L 1/00

(54) **VERFAHREN ZUR DATENÜBERTRAGUNG MIT ERHÖHTER DATENRATE**
METHOD FOR INCREASED RATE DATA TRANSMISSION
PROCEDE DE TRANSMISSION DE DONNEES A DEBIT ELEVE

(30) Priorität: 14.06.1999 DE 19926928
(43) Veröffentlichungstag der Anmeldung: 27.03.2002
(73) Patentinhaber: IHP GmbH-Innovations for High Performance Microelectronics/Institut für innovative Mikroelektronik, 15236 Frankfurt an der Oder (DE)
(72) Erfinder: DAVID, Klaus, D-48159 Münster (DE); KRÄMER, Rolf, D-15517 Fürstenwalde (Spree) (DE)
(74) Vertreter: Eisenführ, Speiser & Partner
(86) Internationale Anmeldenummer: PCT/DE2000/001555
(87) Internationale Veröffentlichungsnummer: WO 2000/077968

(56) Entgegenhaltungen:
- DE-A- 3 012 513
- BALTACI Y ET AL: "PERFORMANCE OF AN ADAPTIVE DATA-RATE MBC SYSTEM USING DIFFERENT FEC CODINGS AND ARQ PROTOCOLS" IEE PROCEEDINGS: COMMUNICATIONS,GB,INSTITUTION OF ELECTRICAL ENGINEERS, Bd. 146, Nr. 2, April 1999 (1999-04), Seiten 127-132, XP000831005 ISSN: 1350-2425

## Beschreibung

Die Erfindung betrifft ein Verfahren zur Datenübertragung.

Bei den heutigen Mobilfunksystemen, beispielsweise GSM, DECT, IS95 und WaveLan, erfolgt für Echtzeitdienste die Übertragung typischerweise mit der minimal erforderlichen Übertragungsrate. Zu diesen Echtzeitdiensten gehören beispielsweise Sprach- und Echtzeitvideoübertragungen. Für nichtechtzeitkritische Anwendungen, beispielsweise e-mail und Filetransfer, erfolgt die Übertragung typischerweise mit der Bitrate des Eingangsdatenstroms oder sogar einer geringeren Übertragungsrate aufgrund der Einschränkungen der Funkübertragung. Dieser Zusammenhang gilt auch für leitungsgebundene Übertragungen. insbesondere im Access-Bereich, wie beispielsweise ISDN oder ADSL/xSDL. Die Beschränkung auf die minimal erforderliche Übertragungsrate erfolgt, um insbesondere die Endgerätekomplexität und die Bandbreitenanforderung zu minimieren.

Eine Übertragung mit geringfügig höherer Übertragungsrate erfolg beispielsweise in dem in der DE 30 12 513 C2 beschriebenen Verfahren zur Überwachung analoger und digitaler Funkverbindungen. Die Signalkomprimierung erfolgt in der Weise, dass das Nutzsignal wie allgemein üblich in Signalblöcke zerlegt und auf der Sendeseite in einen analogen Pufferspeicher eingelesen wird. Der Auslesevorgang des Pufferspeichers erfolgt parallel mit höherem Takt, wobei der Beginn verzögert ist. Diese Komprimierungen erfolgen mit dem Ziel, zusätzliche Signalisierungssignale in die entstehenden Sendelücken einzuspeisen.

Beispielsweise wird dieses Verfahren auch beim Multiplexen von zu übertragenden Signalen angewandt, um die Übertragungskanäle optimal zu nutzen. Bei leitungsgebundenen Übertragungen erfolgt so beispielsweise das Multiplexen vieler Verbindungen über wenige zur Verfügung stehende Leitungen.

Übertragungskanäle stehen jedoch nicht immer konstant günstig zur Verfügung. Insbesondere bei Mobilfunksystemen erfolgt eine sich stetig ändernde Auslastung. Ebenso sind die Störsignale auf die Übertragungszeit ungleichmäßig verteilt. Durch die Ausnutzung der kompletten Übertragungszeit müssen die Sende- und Empfangseinrichtungen stetig mit Energie versorgt werden bzw. erfolgen die Übertragungen häufig in Momenten, in denen eine hohe RF-Leistung aufgrund ungünstiger Mobilkanalübertragungseigenschaften nötig sind, was insbesondere bei akkubetriebenen Mobilfunkgeräten zu nachteilig hohem Energieverbrauch führt. Ein weiteres Problem bei den bekannten Verfahren ist die Synchronisation von Sende- und Empfangssignalblöcken. Die Synchronisation wird durch Übertragungsfehler, insbesondere Jitter, d. h. unterschiedliche Zeitverzögerungen zwischen den Signalblöcken, erschwert. Dies kann beispielsweise bei Sprachmobilfunkübertragungen zu hörbaren Störungen beim Empfang führen. Eine weitere wichtige Möglichkeit, die QoS (Quality of Service) zu verbessern, besteht bei Übertragungsfehlern in einer Übertragungswiederholung (ARQ, Automatic Repeat Request). Ideal wäre, wenn dies ohne zusätzliche Verzögerungen (Delays) möglich wäre. Für manche Anwendungen, insbesondere Telematik- oder Signalisierungsanwendungen, ist es erstrebenswert, besonders schnelle Reaktionen zu ermöglichen.

Es ist somit Aufgabe der Erfindung, ein Verfahren zur Datenübertragung vorzuschlagen. das zur weiteren Störungsverringerung, zur Verringerung der Fehlerrate, des Delays und des Jitters und somit zur Qualitätsverbesserung beiträgt. Weiterhin ist es Aufgabe der Erfindung, Energie während der Übertragung einzusparen, um insbesondere bei mobilen Geräten die Sende- und Empfangsbereitschaft für einen größeren Zeitraum zu gewährleisten.

Erfindungsgemäß wird diese Aufgabe dadurch gelöst, dass in einem Verfahren zur Datenübertragung, bei dem ein Eingangsdatenstrom in Signalblöche vor s Bit zerlegt, übertragen und wieder zusammengefügt wird Eingangsdatenstrom von einer Sendeeinrichtung mit einer gegenüber der Eingangsdatenrate E um einen definierten Faktor x erhöhten Übertragungsrate Ü = x^{·}E gesendet und mittels einer Empfangseinrichtung empfangen wird. Die Übertragung der Signalblöcke wird in Abhängigkeit von mindestens einer bestimmten Bedingung, z. B. Qualitätsbedingungen, Auslastungsbedingungen usw., beliebig innerhalb eines Zeitfensters innerhalb eines Signalblocks mittels einer Übertragungskontrolleinrichtung verschoben. Falls notwendig, insbesondere bei echtzeitkritischen Anwendungen, wird in der Empfangseinrichtung der empfangene Datenstrom wieder auf die ursprüngliche Zeitdauer umgewandelt. Dies wird insbesondere durch einen in der Empfangseinrichtung enthaltenen Speicher realisiert, in den der empfangene Datenstrom geschrieben wird und mit der ursprünglichen Eingangsdatenstromrate ausgelesen wird. Durch diese Übertragung in "Überechtzeit" wird die zur Übertragung von s Bit eines Signalblocks benötigte Zeit von t₁ = s/E auf t₂ = s/(x^{·}E) reduziert. Damit wird also eine übertragungsfreie Zeit von t₃ = [s/E - s/(x^{·}E)] erreicht. Diese übertragungsfreie Zeit kann je nach Anwendungsziel genutzt werden.

Das Verfahren wird folgendermaßen realisiert:

Auf der Sendeseite wird zwischen Datengeber (Server) und Sender ein Datenpuffer eingeführt. Das Schreiben in diesen Puffer wird mittels eines Puffer-Server-Protokolls durchgeführt, bei dem speziell die Anforderungen des Servers berücksichtigt werden (z. B. die maximale Schreibrate). Auf der Empfangsseite wird zwischen den Empfänger und den Datennehmer (Client) ein Datenpuffer geschaltet. Das Lesen aus diesem Puffer wird mittels eines Client-Puffer-Protokolls durchgeführt, wobei sowohl die Eigenschaften des Datenstroms (z. B. Isochronität) als auch die Eigenschaften des Clients berücksichtigt werden. Die beiden Puffer arbeiten über das Netz zusammen über ein Puffer-Puffer-Protokoll, das sowohl die Eigenschaften der Puffer (z. B. die Puffertiefe) als auch die Eigenschaften des Netzes (Geschwindigkeit, aktuelle Fehlerrate, Auslastung) sowie die maximalen Verzögerungen der Datenströme. Durch diese Zwischenschaltung der Puffer sowie die drei entkoppelten Protokolle können die Eigenschaften der Endgeräte, der Netze und der Sendegeräte optimal berücksichtigt werden.

Durch die Erhöhung der Übertragungsrate Ü kann die Übertragung eines Signalblocks beliebig innerhalb eines Zeitfensters eines Signalblocks verzögert werden. Die maximal mögliche Verzögerung ist umso größer, je größer der Faktor x ist, um die die Übertragungsrate Ü gegenüber der Eingangsdatenrate E erhöht wurde.

Vorteilhaft hierbei ist, dass die eigentliche Übertragungszeit verkürzt wird, so dass die notwendige zusätzliche Energie zum Senden und Empfangen in den Zeiten, in denen nicht gesendet bzw. empfangen wird, eingespart wird.

Die Übertragung der Signalblöcke wird in Abhängigkeit von einer bestimmten Bedingung beliebig innerhalb eines Zeitfensters eines Signalblocks verschoben.

Weiterhin ist es möglich, die Verzögerung so zu wählen, dass das Übertragungsnetz möglichst gleichmäßig ausgelastet wird. Dies wird erreicht, indem die einzelnen Signalblöcke zu den Zeitpunkten gesendet werden, in denen die Interferenzen durch andere Signalblöcke (anderer Teilnehmer) minimal sind. Dies kann durch entsprechende Messungen oder durch zufällig verteilte Sendezeitpunkte erreicht werden. Der Übertragungscontroller kennt sowohl den Auslastungszustand des Netzes als auch die QoS-Anforderungen des Teilnehmers. Da er die Wünsche des Teilnehmers schneller als in Echtzeit erfüllen kann, kann er die Wünsche der anderen Teilnehmer entsprechend anordnen, so dass z. B. keine Congestion eintreten kann. Die Übertragungskontrolleinrichtung ist somit eine verteilte Komponente.

Weiterhin ist es möglich, die Verzögerung so zu wählen, dass der Übertragungszeitpunkt aus anderen Gründen besonders günstig ist.

Beispielsweise wird die Übertragung der Signalblöcke derart verschoben, dass der Übertragungszeitpunkt bzgl. Übertragungsqualität (QoS) bezogen auf den Übertragungskanal besonders günstig, d h. z. B. mit geringer Sendeleistung oder mit geringer Fehlerrate übertragen werden kann, ist. Besonders günstig ist beispielsweise, dass vor der aktuellen Übertragung die Übertragungsqualität des Mediums geprüft und die erwartete Bitfehlerrate ermittelt wird. Zur Übertragung werden dann Zeitpunkte gewählt, an denen eine ungestörte Übertragung sehr wahrscheinlich ist. Damit kann beispielsweise Energie eingespart werden, da jede Wiederholung neue Energie verbraucht.

Eine beispielsweise durch Übertragungsfehler, insbesondere Jitter, gestörte Übertragung wird ebenfalls durch die vorhandenen Übertragungslücken kompensiert, sofern die unterschiedlichen relativen Zeitverzögerungen innerhalb dieser Übertragungslücken liegen. Somit werden beispielsweise bei Sprachmobilfunkübertragungen hörbare Störungen beim Empfang verringert bzw. vermieden.

Falls die Informationsmenge auf einen Signalblock beschränkbar ist, kann die Verzögerung verringert werden. Dies findet beispielsweise bei Telematikanwendungen oder kurzen Signalisierungen Verwendung.

Das erfindungsgemäße Verfahren findet sowohl für echtzeitkritische als auch nichtechtzeitkritische Anwendungen Verwendung. Insbesondere bei echtzeitkritischen Anwendungen wird der empfangene Datenstrom wieder auf die ursprüngliche Zeitdauer umgewandelt. Für nichtechtzeitkritische Anwendungen, z. B. e-mail, kann dies, muss aber nicht erfolgen. In einer weiteren Anwendung werden mehrere Übertragungen bzw. Signalblöcke zeitmultiplext.

Die Merkmale der Erfindung gehen außer aus den Ansprüchen auch aus der Beschreibung hervor, wobei die einzelnen Merkmale jeweils für sich allein oder zu mehreren in Form von Unterkombinationen schutzfähige Ausführungen darstellen, für die hier Schutz beansprucht wird. Ein Ausführungsbeispiel der Erfindung ist im Folgenden näher erläutert.

In diesem Ausführungsbeispiel wird eine Echtzeitübertragung von Sprachsignalen im GSM (Global System for Mobile Communication) realisiert. Ein Sprachcoder, insbesondere ein Fullrate-Sprachcoder, liefert im GSM eine Datenübertragungsrate von 13 kBit/s, die im Normalfall auch mit dieser Nettobitrate über die Funkstrecke zum Endgerät übertragen wird. Dabei liefert der Sprachcoder alle 20 ms Signalblöcke von 260 Bit. Die Übertragungsdauer eines Signalblocks beträgt somit theoretisch 20 ms. Bei herkömmlichem GSM dauert die praktische Übertragung infolge sogenannter Interleavings etwas länger.

Erfindungsgemäß wird nun die Übertragungsrate auf 130 kBit/s, d. h. um den Faktor 10 erhöht. Die theoretische Übertragungszeit beträgt somit 2 ms. Die übertragungsfreie Zeit beträgt in diesem Ausführungsbeispiel 18 ms. Innerhalb des Zeitfensters von 20 ms ist der Signalblock frei verschiebbar, in diesem Ausführungsbeispiel zwischen 0 ms und 18 ms.

Die Verzögerung wird so gewählt, dass das Übertragungsnetz möglichst gleichmäßig ausgelastet wird.

Weiterhin ist es möglich, die Verzögerung so zu wählen, dass der Übertragungszeitpunkt besonders günstig ist.

Die Signalkomprimierung erfolgt in der Weise, dass das Nutzsignal in Signalblöcke zerlegt und auf der Sendeseite in einen analogen Pufferspeicher eingelesen wird. Der Auslesevorgang des Pufferspeichers erfolgt parallel mit höherem Takt, wobei der Beginn verzögert ist. In der Empfangseinrichtung wird der empfangene Datenstrom wieder auf die ursprüngliche Zeitdauer umgewandelt. Dies wird durch einen in der Empfangseinrichtung enthaltenen Speicher realisiert, in den der empfangene Datenstrom geschrieben wird und mit der ursprünglichen Eingangsdatenstromrate von 13 kBit/s ausgelesen wird. Anschließend erfolgt die übliche elektronische Verstärkung und Ausgabe beispielsweise mittels Lautsprecher.

Es besteht weiterhin die Möglichkeit, ARQ (Automatic Repeat Request) zu verwenden und trotzdem noch die Echtzeitanforderungen erfüllen zu können. In diesem Ausführungsbeispiel könnte theoretisch jeder Signalblock bis zu maximal neunmal wiederholt werden, ohne dass zusätzliche Verzögerungen (Delays) auftreten.

Weitere Anwendungsbeispiele sind Feueralarme sowie Steuerungen von Maschinen.

In der vorliegenden Beschreibung wurde anhand eines konkreten Ausführungsbeispiels ein Verfahren zur Datenübertragung erläutert. Es sei aber vermerkt, dass die vorliegende Erfindung nicht auf die Einzelheiten der Beschreibung im Ausführungsbeispiel beschränkt ist. da im Rahmen der Ansprüche Änderungen und Abwandlungen beansprucht werden.

## Patentansprüche

1. Verfahren zur Datenübertragung, bei dem ein Eingangsdatenstrom in Signalblöcke von s Bit zerlegt, übertragen und wieder zusammengefügt wird, **dadurch gekennzeichnet, dass** der Eingangsdatenstrom von einer Sendeeinrichtung mit einer gegenüber der Eingangsdatenrate E um einen definierten Faktor x erhöhten Übertragungsrate Ü = x E gesendet und mittels einer Empfangseinrichtung empfangen wird, wobei die Übertragung der Signalblöcke in Abhängigkeit von mindestens einer bestimmten Bedingung beliebig innerhalb eines Zeitfensters eines Signalblocks mittels einer Übertragungskontrolleinrichtung verschoben wird.

2. Verfahren nach Anspruch 1, **dadurch gekennzeichnet, dass** die Übertragung der Signalblöcke derart verschoben wird, dass durch die verzögerte Übertragung das Übertragungsnetz gleichmäßig ausgelastet wird, indem die einzelnen Signalblöcke zu den Zeitpunkten gesendet werden, in denen Interferenzen durch andere Signalblöcke anderer Teilnehmer minimal sind.

3. Verfahren nach Anspruch 2, **dadurch gekennzeichnet, dass** die Zeitpunkte, in denen die Signalblöcke gesendet werden, durch Messungen oder durch zufällig verteilte Sendezeitpunkte bestimmt werden.

4. Verfahren nach Ansprüchen 1 bis 3, **dadurch gekennzeichnet, dass** vor der aktuellen Übertragung die Übertragungsqualität des Mediums geprüft und die erwartete Bitfehlerrate ermittelt wird.

5. Verfahren nach Anspruch 4, **dadurch gekennzeichnet, dass** zur Übertragung der Signalblöcke Zeitpunkte gewählt werden, an denen eine ungestörte Übertragung wahrscheinlich ist.

6. Verfahren nach einem oder mehreren der Ansprüche 1 bis 5, **dadurch gekennzeichnet, dass** ARQ verwendet wird, d. h. mindestens ein Signalblock ein- oder mehrfach wiederholt wird.

7. Verfahren nach einem oder mehreren der Ansprüche 1 bis 6, **dadurch gekennzeichnet, dass** in der Empfangseinrichtung der empfangene Datenstrom wieder auf die ursprüngliche Zeitdauer umgewandelt wird.

8. Verfahren nach einem oder mehreren der Ansprüche 1 bis 7, **dadurch gekennzeichnet, dass** der Eingangsdatenstrom zeitlich komprimiert wird, indem der Eingangsdatenstrom in Signalblöcke zerlegt und auf der Sendeseite in einen digitalen Pufferspeicher eingelesen wird, der Auslesevorgang des Pufferspeichers parallel mit höherem Takt erfolgt, wobei der Beginn verzögert sein kann, in der Empfangseinrichtung der empfangene Datenstrom wieder auf die ursprüngliche Zeitdauer umgewandelt wird, indem der empfangene Datenstrom in einem in der Empfangseinrichtung enthaltenen Speicher abgelegt und mit der ursprünglichen Eingangsdatenrate E ausgelesen wird.

9. Verfahren nach einem oder mehreren der Ansprüche 1 bis 8, **dadurch gekennzeichnet, dass** die Übertragung drahtgebunden oder drahtlos erfolgt.

10. Verfahren nach einem oder mehreren der Ansprüche 1 bis 9, **dadurch gekennzeichnet, dass** die Übertragung mittels Lichtwellenleiter erfolgt.

11. Verfahren nach einem oder mehreren der Ansprüche 1 bis 10, **dadurch gekennzeichnet, dass** echtzeitkritische und/oder nichtechtzeitkritische Signale übertragen werden.

12. Verfahren nach einem oder mehreren der Ansprüche 1 bis 11, **dadurch gekennzeichnet, dass** digitale Signale übertragen werden.

## Claims

1. Method of data transmission, in which a stream of input data is broken down into signal blocks of s bits, transmitted and assembled again, **characterised in that** the stream of input data is transmitted from a transmitting device at a transmission rate Ü = x E which is increased by a defined factor x relative to the input data rate E and is received by a receiving device, transmission of the signal blocks being shifted as required within a time window of a signal block by means of a transmission control device as a function of at least one specific condition.

2. Method according to claim 1, **characterised in that** the transmission of the signal blocks is shifted in such a way that the transmission network is uniformly loaded owing to the delayed transmission, **in that** the individual signal blocks are transmitted at instants in which interferences by other signal blocks of other users are minimal.

3. Method according to claim 2, **characterised in that** the instants in which the signal blocks are transmitted are determined by measurements or by randomly distributed transmitting instants.

4. Method according to claims 1 to 3, **characterised in that** the transmission quality of the medium is checked prior to the current transmission and the expected bit error rate is determined.

5. Method according to claim 4, **characterised in that** instants at which undisturbed transmission is probable are selected for transmitting the signal blocks.

6. Method according to one or more of claims 1 to 5, **characterised in that** ARQ is used, in other words at least one signal block is repeated one or more times.

7. Method according to one or more of claims 1 to 6, **characterised in that**, in the receiving device, the received stream of data is converted back to the original time period.

8. Method according to one or more of claims 1 to 7, **characterised in that** the stream of input data is compressed with respect to time, **in that** the stream of input data is broken down into signal blocks and, at the transmitting end, is read into a digital buffer memory, the reading-out process of the buffer memory takes place in parallel at a higher rate, wherein the beginning may be delayed, the received data stream is converted back in the receiving device to the original time period, **in that** the received data stream is stored in a memory contained in the receiving device and is read out at the original input data rate E.

9. Method according to one or more of claims 1 to 8, **characterised in that** transmission takes place with wire connection or wirelessly.

10. Method according to one or more of claims 1 to 9, **characterised in that** transmission takes place by means of optical waveguides.

11. Method according to one or more of claims 1 to 10, **characterised in that** real time-critical and/or non-real time-critical signals are transmitted.

12. Method according to one or more of claims 1 to 11, **characterised in that** digital signals are transmitted.

## Revendications

1. Procédé de transmission de données, selon lequel un flux de données d'entrée est subdivisé en blocs de signaux comprenant s bits, est transmis et est à nouveau rassemblé, **caractérisé en ce que** le flux de données d'entrée est émis par un dispositif d'émission avec une cadence de transmission Ü = xE qui est accrue d'un facteur défini x par rapport à la cadence de données E, et est reçu au moyen d'un dispositif de réception, la transmission des blocs de signaux étant décalée d'une manière quelconque en fonction d'au moins une condition déterminée, à l'intérieur d'une fenêtre temporelle d'un bloc de signaux à l'aide d'un dispositif de contrôle de transmission.

2. Procédé selon la revendication 1, **caractérisé en ce que** la transmission des blocs de signaux est décalée de telle sorte que sous l'effet de la transmission retardée, le réseau de transmission est déchargé d'une manière uniforme par le fait que les différents blocs de signaux sont émis aux instants, auxquels des interférences dues à d'autres blocs de données d'autres abonnés sont minimales.

3. Procédé selon la revendication 2, **caractérisé en ce que** les instants, auxquels les blocs de signaux sont émis, sont déterminés par des mesures ou par des instants d'émission répartis de façon aléatoire.

4. Procédé selon les revendications 1 à 3, **caractérisé en ce qu'**avant la transmission effective, la qualité de transmission du milieu est contrôlée et le taux attendu d'erreurs sur les bits est déterminé.

5. Procédé selon la revendication 4, **caractérisé en ce que** pour la transmission des blocs de signaux on choisit des instants, auxquels une transmission non perturbée est vraisemblable.

6. Procédé selon une ou plusieurs des revendications 1 à 5, **caractérisé en ce qu'**on utilise une demande de répétition automatique ARQ, c'est-à-dire qu'au moins un bloc de signaux est répété une ou plusieurs fois.

7. Procédé selon une ou plusieurs des revendications 1 à 6, **caractérisé en ce que** dans le dispositif de réception, le flux de données reçu est à nouveau ramené par conversion à la durée initiale.

8. Procédé selon une ou plusieurs des revendications 1 à 7, **caractérisé en ce que** le flux de données d'entrée est comprimé dans le temps par le fait que le flux de données d'entrée est divisé en des blocs de signaux et est inséré sur le côté émission dans une mémoire tampon numérique, que le processus de lecture de la mémoire tampon s'effectue en parallèle avec une cadence accrue, auquel cas le début peut être retardé et, dans le dispositif de réception, le flux de données reçu est ramené à nouveau par conversion à la durée initiale, par le fait que le flux de données reçu est mémorisé dans une mémoire tampon du dispositif de réception et est lu avec la cadence initiale de données d'entrée E.

9. Procédé selon une ou plusieurs des revendications 1 à 8, **caractérisé en ce que** la transmission s'effectue selon une liaison par fil ou sans fil.

10. Procédé selon une ou plusieurs des revendications 1 à 9, **caractérisé en ce que** la transmission s'effectue à l'aide de guides d'ondes lumineuses.

11. Procédé selon une ou plusieurs des revendications 1 à 10, **caractérisé en ce que** des signaux critiques en temps réel et/ou non critiques en temps réel sont transmis.

12. Procédé selon l'une des revendications 1 à 11, **caractérisé en ce que** des signaux numériques sont transmis.
